# EUROPEAN PATENT SPECIFICATION

(11) **EP 3 342 947 B1**
(45) Date of publication and mention of the grant of the patent: **08.07.2020**
(21) Application number: 16839349.4
(22) Date of filing: 25.08.2016
(51) Int. Cl.: B32B 25/08, B32B 27/18, B32B 27/30, E06B 5/16

(54) **ADHESIVE LAYER-PROVIDED FIREPROOF MEMBER**
MIT KLEBSTOFFSCHICHT AUSGESTATTETES FEUERFESTES ELEMENT
ÉLÉMENT IGNIFUGE DOTÉ D'UNE COUCHE ADHÉSIVE

(30) Priority: 25.08.2015 JP 2015165404
(43) Date of publication of application: 04.07.2018
(73) Proprietor: Sekisui Chemical Co., Ltd., Osaka-shi, Osaka 530-8565 (JP)
(72) Inventor: SHIMAMOTO, Michio, Hasuda-shi Saitama 349-0198 (JP); YANO, Hideaki, Hasuda-shi Saitama 349-0198 (JP)
(74) Representative: Ter Meer Steinmeister & Partner
(86) International application number: PCT/JP2016/074845
(87) International publication number: WO 2017/034002

(56) References cited:
- WO-A1-2011/162393
- JP-A- H07 100 784
- JP-A- 2000 054 752
- JP-A- 2000 198 895
- JP-B1- 5 347 103
- JP-B2- 3 259 630
- JP-B2- 4 132 324
- DATABASE WPI Week 200063 Thomson Scientific, London, GB; AN 2000-649427 XP002789116, & JP 2000 198895 A (TOYO CHEM CORP) 18 July 2000 (2000-07-18)

## Description

### Technical Field

The present invention relates to an adhesive layer-equipped fire-resistant member.

### Background Art

Fire-resistant members are used for imparting fire resistance properties to structures. A known fire-resistant member is a tape-shaped fire-resistant member in which an adhesive layer is provided on one or both surfaces of a film substrate containing vinyl chloride resin (PTL 1). For example, PTL 1 discloses that the layer of the film substrate containing vinyl chloride resin contains 30 to 70 parts by weight of a plasticizer, 70 to 200 parts by weight of a flame-resistant filler, and 5 to 50 parts by weight of NBR (nitrile rubber), relative to 100 parts by weight of vinyl chloride. PTL 2 relates to a decorative sheet for wallpaper (see schematic diagram) comprising a plasticizer migration preventing layer (2), a PVC layer (3), a surface treatment layer (4), and a pattern printing layer (5) formed in sequence on the surface of a base layer (1), made of e.g. a flame retardant lining paper. A plasticizer migration preventing layer (6) is formed on the back of the base layer (1), and a pressure sensitive adhesive layer (7) is formed on the surface of the plasticizer migration preventing layer (6).

### Citation List

### Patent Literature

PTL 1: JP2000-198895A
PTL 2: JP 3 259630 B2

### Summary of Invention

### Technical Problem

In order to enhance the fire resistance of a fire-resistant member for imparting fire resistance to structures, one may consider increasing the amount of the flame-resistant filler, such as thermally expandable graphite or an inorganic filler, contained in the film substrate. However, increasing the amount of the flame-resistant filler increases the viscosity of the composition itself, thus causing the composition to be difficult to form into a film shape. Meanwhile, increasing the temperature during the molding process is not preferable because the thermally expandable graphite may expand during the molding process. To improve the molding processability of such a composition, a liquid additive, such as a plasticizer, is added.

However, in a fire-resistant member in which an adhesive layer is provided on a film substrate containing a liquid additive, the liquid additive in the substrate may migrate into the adhesive layer, and the proportion of the liquid additive in the fire-resistant layer may decrease, resulting in a reduction in shape retention, among fire resistance properties, of the fire-resistant member after combustion, or migration of the liquid additive into the adhesive layer may decrease the adhesion of the adhesive layer. Thus, there is a need for the configuration of a fire-resistant member that inhibits such migration of the liquid additive into the adhesive layer.

An object of the present invention is to provide a fire-resistant member having excellent fire resistance and adhesion.

Another object of the present invention is to provide a fire-resistant member having excellent fire resistance, adhesion, and shape retention.

### Solution to Problem

The present inventors found that the above objects can be achieved by using a liquid additive-resistant adhesive layer as an adhesive layer, or providing a liquid additive-resistant underlying layer between a liquid additive-containing fire-resistant layer and an adhesive layer. The present invention has thus been accomplished. The term "liquid additive-resistant" refers to a property that partially or completely inhibits migration of a liquid additive from a fire-resistant layer into an adhesive layer.

According to a first aspect of the present invention, there is provided an adhesive layer-equipped fire-resistant member comprising a fire-resistant layer containing a liquid additive and one or more components selected from the group consisting of thermoplastic resins, thermoplastic elastomers, and rubbers, and a liquid additive-resistant adhesive layer disposed on one side of the fire-resistant layer.

According to a second aspect of the present invention, there is provided an adhesive layer-equipped fire-resistant member comprising a fire-resistant layer containing a liquid additive and one or more components selected from the group consisting of thermoplastic resins, thermoplastic elastomers, and rubbers, an adhesive layer, and a liquid additive-resistant underlying layer disposed between the fire-resistant layer and the adhesive layer.

### Advantageous Effects of Invention

According to the present invention, fire resistance can be easily imparted while maintaining excellent adhesion to a structure, and shape retention.

### Brief Description of Drawings

Fig. 1 is a schematic cross-sectional view of the fire-resistant member according to a first embodiment of the present invention.
Fig. 2 is a schematic cross-sectional view of the fire-resistant member according to a second embodiment of the present invention.

### Description of Embodiments

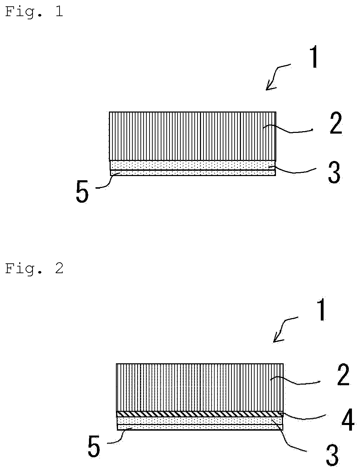

An adhesive layer-equipped fire-resistant member according to the first embodiment of the present invention is described with reference to Fig. 1.

As shown in Fig. 1, an adhesive layer-equipped fire-resistant member 1 comprises a fire-resistant layer 2 containing a liquid additive and one or more components selected from the group consisting of thermoplastic resins, thermoplastic elastomers, and rubbers, and a liquid additive-resistant adhesive layer 3 disposed on one surface of the fire-resistant layer 2. A release paper 5 is attached to the adhesive layer 3, and the release paper 5 is peeled off and removed when the fire-resistant member 1 is laid onto a structure.

The fire-resistant layer 2 is preferably formed from a fire-resistant resin composition comprising one or more components selected from the group consisting of thermoplastic resins, thermoplastic elastomers, and rubbers, as one or more matrix components, thermally expandable graphite, an inorganic filler, and a liquid additive.

Examples of thermoplastic resins include, but are not particularly limited to, polyvinyl chloride resin (PVC), ethylene-vinyl acetate copolymers (EVA), chlorinated polyvinyl chloride resin (CPVC).

As ethylene-vinyl acetate copolymers, those having a vinyl acetate content of 10 to 50 mass% are preferable, and those having a vinyl acetate content of 10 to 35 mass% are more preferable.

Examples of thermoplastic elastomers include, but are not particularly limited to, olefinic elastomers (TPO), styrenic elastomers (TPS), and the like.

Examples of rubbers include, but are not particularly limited to, ethylene propylene rubber (EPDM), chloroprene rubber (CR).

The thermally expandable graphite is a conventionally known substance that is expanded upon heating. The thermally expandable graphite is a graphite intercalation compound formed by subjecting a powder, such as natural flake graphite, pyrolytic graphite, or kish graphite, to an acid treatment with an inorganic acid, such as concentrated sulfuric acid, nitric acid, or selenic acid; and a strong oxidizing agent, such as concentrated nitric acid, perchloric acid, perchlorate, permanganate, dichromate, or hydrogen peroxide. The thermally expandable graphite is a kind of crystalline compound that retains the layered structure of the carbon.

The thermally expandable graphite obtained by acid treatment as mentioned above may be further neutralized with ammonia, an aliphatic lower amine, an alkali metal compound, an alkaline earth metal compound, or the like. The grain size of the thermally expandable graphite is preferably in the range of 20 to 200 mesh. When the grain size is 200 mesh or smaller, the degree of expansion of the graphite is sufficient to obtain an expandable heat insulating layer. When the grain size is 20 mesh or greater, the dispersibility upon mixing with a resin becomes desirable, thereby ensuring desirable properties. Examples of commercially available products of thermally expandable graphite include "GREP-EG" produced by Tosoh Corporation, "GRAFGUARD" produced by GRAFTECH.

When an expandable heat insulating layer is formed, the inorganic filler contained therein increases the heat capacity and suppresses the heat transfer, and also functions as an aggregate, thereby improving the strength of the expandable heat insulating layer. Examples of inorganic fillers include, but are not particularly limited to, metal oxides, such as alumina, zinc oxide, titanium oxide, calcium oxide, magnesium oxide, iron oxide, tin oxide, antimony oxide, and ferrites; hydrated inorganic substances, such as calcium hydroxide, magnesium hydroxide, aluminum hydroxide, and hydrotalcite; metal carbonates, such as basic magnesium carbonate, calcium carbonate, magnesium carbonate, zinc carbonate, strontium carbonate, and barium carbonate.

In addition to the above, examples of inorganic fillers also include calcium salts, such as calcium sulfate, gypsum fiber, and calcium silicate; silica, diatomaceous earth, dawsonite, barium sulfate, talc, clay, mica, montmorillonite, bentonite, activated clay, sepiolite, imogolite, sericite, glass fiber, glass bead, silica balloon, aluminum nitride, boron nitride, silicon nitride, carbon black, graphite, carbon fiber, carbon balloon, charcoal powder, various types of metal powder, potassium titanate, magnesium sulfate "MOS" (trade name), lead zirconate titanate, zinc stearate, calcium stearate, aluminum borate, molybdenum sulfide, silicon carbide, stainless steel fiber, zinc borate, various types of magnetic powder, slag fiber, fly ash, dehydrated sludge, the below-described polyphosphoric acid salts. These inorganic fillers may be used singly or in a combination of two or more.

The particle size of the inorganic filler is preferably 0.5 to 100 µm, and more preferably 1 to 50 µm. When the amount of inorganic filler added is small, the dispersibility thereof significantly influences the performance; therefore, the inorganic filler preferably has a small particle size. However, if the particle size is smaller than 0.5 µm, secondary aggregation occurs, resulting in decreased dispersibility. Thus, the inorganic filler preferably has a particle size of 0.5 µm or more. When the amount of inorganic filler added is large, the viscosity of the resin composition increases, thereby decreasing moldability as high filling is achieved; however, since the viscosity of the resin composition can be decreased by increasing the inorganic filler particle size, the inorganic filler preferably has a large particle size. However, if the particle size is larger than 100 µm, the surface properties of the resulting molded article and the mechanical performance of the resin composition decrease. Thus, the inorganic filler preferably has a particle size of 100 µm or less.

Among the inorganic fillers, examples of aluminum hydroxide include "HIGILITE H-31" having a particle size of 18 µm (produced by Showa Denko K.K.), "B325" having a particle size of 25 µm (produced by ALCOA), and the like, and examples of calcium carbonate include "WHITON SB (red)" having a particle size of 1.8 µm (produced by Bihoku Funka Kogyo Co.,Ltd.), "BF300" having a particle size of 8 µm (produced by Bihoku Funka Kogyo Co.,Ltd.)..

The amount of thermally expandable graphite is not particularly limited. It is preferred that the amount of thermally expandable graphite fall within the range of 10 parts by weight or more and 350 parts by weight or less, and preferably 50 parts by weight or more and 250 parts by weight or less, relative to 100 parts by weight of the one or more matrix components.

The amount of inorganic filler is also not particularly limited. It is preferred that the amount of inorganic filler fall within the range of 10 parts by weight or more and 400 parts by weight or less, and preferably 50 parts by weight or more and 300 parts by weight or less, relative to 100 parts by weight of the one or more matrix components.

The total amount of thermally expandable graphite and inorganic filler preferably falls within the range of 20 to 600 parts by weight relative to 100 parts by weight of the one or more matrix components.

Further, the proportion of inorganic filler to thermally expandable graphite is preferably such that the amount of inorganic filler falls within the range of 10 to 300 parts by weight, preferably 20 to 200 parts by weight, and more preferably 30 to 150 parts by weight, relative to 100 parts by weight of thermally expandable graphite.

The resin composition expands by heating, thereby forming a fire-resistant heat insulating layer. When thermally expandable graphite and an inorganic filler are used in the amounts described above, the thermally expandable fire-resistant material can expand subsequent to exposure to heat from a fire or the like to accomplish the necessary volume expansion. After expansion, the material can form residues having predetermined heat insulating properties and predetermined strength, thereby ensuring a stable fireproof performance.

When the total amount of thermally expandable graphite and inorganic filler in the resin composition is 20 parts by weight or more, the residue amount after combustion can be satisfied and sufficient fire resistance properties can be ensured. When the total amount of thermally expandable graphite and inorganic filler in the resin composition is 600 parts by weight or less, the mechanical properties can be retained.

When the fire-resistant layer 2 contains thermally expandable graphite and an inorganic filler, the resin composition tends to be vulnerable to moisture, and white deposits may be formed on the surface of the resin composition by hydrolysis. In order to suppress this, a liquid additive, such as a plasticizer, contained in the fire-resistant layer 2 is used for improving the water resistance of the surface of the fire-resistant layer 2. The liquid additive is not particularly limited as long as it is an additive that is liquid at room temperature (23°C), such as a plasticizer generally used for producing a molded article. For example, the following liquid additives, such as plasticizers, may be used singly or in a combination of two or more:
phthalic acid ester-based plasticizers, such as di-2-ethylhexyl phthalate (DOP), di-n-octyl phthalate, diisononyl phthalate (DINP), diisodecyl phthalate (DIDP), diundecyl phthalate (DUP), and phthalic acid esters of higher alcohols having about 10 to 13 carbon atoms or mixed alcohols thereof;
aliphatic dibasic acid ester-based plasticizers, such as di-2-ethylhexyl adipate, di-n-octyl adipate, di-n-decyl adipate, diisodecyl adipate, di-2-ethylhexyl azelate, dibutyl sebacate, and di-2-ethylhexyl sebacate;
trimellitic acid ester-based plasticizers, such as tri-2-ethylhexyl trimellitate (TOTM), tri-n-octyl trimellitate, tridecyl trimellitate, triisodecyl trimellitate, and di-n-octyl-n-decyl trimellitate;
adipic acid ester-based plasticizers, such as di-2-ethylhexyl adipate (DOA) and diisodecyl adipate (DIDA);
sebacic acid ester-based plasticizers, such as dibutyl sebacate (DBS) and di-2-ethylhexyl sebacate (DOS);
phosphoric acid ester-based plasticizers, such as tributyl phosphate, trioctyl phosphate, octyl diphenyl phosphate, tributoxyethyl phosphate, trichloroethyl phosphate, tris(2-chloropropyl)phosphate, tris(2,3-dichloropropyl)phosphate, tris(2,3-dibromopropyl)phosphate,
tris(bromochloropropyl)phosphate, bis(2,3-dibromopropyl)-2,3-dichloropropyl phosphate, and bis(chloropropyl)monooctyl phosphate;
biphenyltetracarboxylic acid tetraalkyl ester-based plasticizers, such as 2,3,3',4'-biphenyltetracarboxylic acid tetraheptyl ester; polyester-based polymeric plasticizers;
epoxy-based plasticizers, such as epoxidized soybean oil, epoxidized linseed oil, epoxidized cottonseed oil, and liquid epoxy resin;
silicone oils, such as dimethyl silicone oil, methyl hydrogen silicone oil, and methyl phenyl silicone oil;
process oil and liquid paraffin;
chlorinated paraffin;
chlorinated fatty acid esters, such as pentachlorostearic acid alkyl ester;
phosphorus compounds that are liquid at room temperature.

The phosphorus compounds that are liquid at room temperature are not particularly limited. Examples include phosphoric acid esters, such as trimethyl phosphate, triethyl phosphate, tributyl phosphate, tris(2-ethylhexyl) phosphate, triphenyl phosphate, tricresyl phosphate (TCP), trixylenyl phosphate, cresyl diphenyl phosphate, and xylenyl diphenyl phosphate.

The liquid additive contained in the fire-resistant layer 2 is preferably a liquid component having an aromatic ring structure. The liquid component having an aromatic ring structure can improve the dispersibility of, for example, thermally expandable graphite. Preferred examples of the liquid component having an aromatic ring structure include liquid additives, such as one or more plasticizers selected from the group consisting of di-2-ethylhexyl phthalate (DOP), tricresyl phosphate (TCP), and diisodecyl phthalate (DIDP).

In order to cause the liquid additive to bleed out onto the surface of the fire-resistant layer 2 to improve water resistance, the amount of liquid additive preferably falls within the range of 120 parts by weight or less relative to 100 parts by weight of the one or more matrix components, although it is not limited. The lower limit of the amount of liquid additive is not particularly limited, and it is preferred that the lower limit of the amount of liquid additive be 10 parts by weight or more, and preferably 20 parts by weight or more, relative to 100 parts by weight of the one or more matrix components. When the liquid additive is used in an amount within the above range, the liquid additive rises to the surface of the resin composition to form an oil film, thus rendering the surface of the resin composition water repellent. Therefore, the water resistance of the resin composition and of the fire-resistant layer 2 formed using the resin composition is notably improved.

The molecular weight of the liquid additive is preferably 500 or less. The molecular weight of the liquid additive is preferably 150 to 500. By selecting a liquid additive with such a molecular weight, the fire-resistant member 1 can have sufficient initial adhesion or long-term adhesion even if the liquid additive migrates into the adhesive layer 3.

The fire-resistant layer 2 may further contain a flame retardant including a polyphosphoric acid salt.

Examples of polyphosphoric acid salts include ammonium polyphosphate (APP), melamine polyphosphate, and the like. The polyphosphoric acid salt is preferably ammonium polyphosphate. In particular, when ammonium polyphosphate is combined with di-2-ethylhexyl phthalate (DOP), which is a plasticizer, the water resistance of the fire-resistant layer 2 is notably improved. Examples of commercially available products of ammonium polyphosphate include "AP422" and "AP462" produced by Clariant, "Sumisafe P" produced by Sumitomo Chemical Industry Company Limited, and "Terraju C60" produced by Chisso Corporation.

Preferred ammonium polyphosphate is surface-coated ammonium polyphosphate (also referred to as "coated ammonium polyphosphate"). Among coated ammonium polyphosphate, melamine-coated ammonium polyphosphate, which is surface-coated with melamine, is disclosed in JPH09-286875A, and silane-coated ammonium polyphosphate, which is surface-coated with silane, is disclosed in JP2000-063562A. Melamine-coated ammonium polyphosphate is (a) melamine-coated ammonium polyphosphate in which melamine is added and/or adhered to the surface of powdery ammonium polyphosphate particles, (b) coated ammonium polyphosphate in which the surface of the melamine-coated ammonium polyphosphate particles is crosslinked by a reaction of active hydrogen of amino groups in melamine molecules present in the coating layer of the melamine-coated ammonium polyphosphate particles and a compound having a functional group capable of reacting with the active hydrogen, and/or (c) coated ammonium polyphosphate in which the surface of powdery ammonium polyphosphate or the melamine-coated ammonium polyphosphate particles is coated with a thermosetting resin. Examples of commercially available products of melamine-coated ammonium polyphosphate particles include "AP462" produced by Clariant, "FR CROS 484" and "FR CROS 487" produced by Budenheim Iberica, and the like. Examples of commercially available products of silane-coated ammonium polyphosphate particles include "FR CROS 486" produced by Budenheim Iberica.

The average particle size of the coated ammonium polyphosphate is preferably 15 to 35 µm. The average particle size of the coated ammonium polyphosphate can be measured by laser diffraction particle size distribution measurement.

The fire-resistant layer 2 may further contain a stabilizer including a higher fatty acid metal salt. Preferred examples of higher fatty acid metal salts include calcium stearate, barium stearate, lead stearate, zinc stearate, and the like.

The amount of stabilizer is not limited. When the amount of stabilizer is small, the strength of a substrate is maintained, whereas when the amount of stabilizer is large, the weather resistance is maintained. Thus, the amount of stabilizer is preferably 3 to 20 parts by weight.

The liquid additive serves as a carrier for allowing a metal-containing stabilizer to migrate to an adhesive layer. The stabilizer described above is allowed to migrate with the liquid additive to the adhesive layer 3, and the metal in the stabilizer allowed to migrate to the adhesive layer 3 undergoes a crosslinking reaction with functional groups of the acrylic resin-based adhesive in the adhesive layer 3, thereby improving adhesion.

The adhesive layer 3 preferably satisfies at least one of the following (I-1) and (I-2), thereby suppressing the influence of the liquid additive on adhesion.

(I-1) A resin that the adhesive layer comprises has a weight-average molecular weight of 500000 or more.
(I-2) The adhesive layer contains the same kind of liquid additive as the liquid additive contained in the fire-resistant layer.

The adhesive layer 3 more preferably satisfies the following (II) or (III) in addition to (I-1) or (I-2) described above, thereby suppressing the influence of the liquid additive on adhesion.
(II) the resin that the adhesive layer comprises contains 0.5 to 40 wt% acrylic acid as a constituent component.
(III) the resin that the adhesive layer comprises contains 1 to 10 wt% vinylpyrrolidone as a monomer component.

As an adhesive used for producing an adhesive layer 3 that satisfies the requirements described above, a known acrylic adhesive, butyl rubber-based adhesive, or the like can be used. The adhesive is preferably an acrylic adhesive containing an acrylic acid-based ester as a main component. The acrylic adhesive is generally obtained by mixing acrylic acid-based monomer components with a polymerization initiator and polymerizing the monomer components.

In one embodiment, the adhesive layer 3 is formed from an acrylic resin that is a polymer obtained by copolymerizing an acrylic acid ester-based monomer(1), acrylic acid (2), and optionally further other copolymerizable monomer(s) (3) in the presence of a polymerization initiator.

Examples of the acrylic acid ester-based monomer (1) include (meth) acrylic acid esters and, in particular, C₁₋₁₂ alkyl-, preferably C₄₋₁₂ alkyl-containing (meth) acrylic acid alkyl esters. Specific examples include n-butyl (meth)acrylate, iso-butyl (meth)acrylate, tert-butyl (meth)acrylate, n-propyl (meth)acrylate, n-hexyl (meth)acrylate, 2-ethylhexyl (meth)acrylate, n-octyl (meth)acrylate, lauryl (meth)acrylate, and the like. Examples further include 2-methoxyethyl (meth)acrylate, 3-methoxyethyl (meth)acrylate, methoxydiethylene glycol (meth)acrylate.

Examples of the other copolymerizable monomer(s) (3) include N-acrylamidomethyltrimethylammonium chloride, allyltrimethylammonium chloride, dimethylallyl vinyl ketone, N-vinylpyrrolidone, vinyl propionate, vinyl stearate, vinyl chloride, vinylidene chloride, vinyl acetate, styrene, and the like.

The acrylic resin is obtained by copolymerizing an acrylic acid ester-based monomer (1), acrylic acid (2), and optionally further other copolymerizable monomer(s) (3).

In the copolymerization, a polymerization initiator, an acrylic acid ester-based monomer (1), acrylic acid (2), and optionally further other copolymerizable monomer(s) (3) are mixed in or added dropwise to an organic solvent and polymerized under reflux or at 50 to 90°C for 2 to 20 hours.

The proportions of the acrylic acid ester-based monomer (1), acrylic acid (2), and other copolymerizable monomer(s) (3) are not particularly limited. The proportion of the acrylic acid ester-based monomer (1) is preferably 50 to 99.9 wt%, and particularly preferably 60 to 99.5 wt%, the proportion of the acrylic acid (2) is preferably 0.1 to 50 wt%, and particularly preferably 0.5 to 40 wt%, and the proportion of the other copolymerizable monomer(s) (3) is preferably 0 to 30 wt%, particularly preferably 0 to 20 wt%, and even more preferably 1 to 10 wt%.

The polymerization initiator is not particularly limited. Examples include azobisisobutyronitrile, azobisisovaleronitrile, benzoyl peroxide, and the like. These may be used singly or in a combination of two or more.

In a further embodiment, the adhesive layer 3 may be obtained by mixing the acrylic resin with an unsaturated group-containing compound having an isocyanate group capable of reacting with a functional group of the acrylic resin, and a photoinitiator to form a composition, and irradiating the composition with active energy rays, as disclosed in JP5052030B.

The adhesive layer 3 may further comprise a liquid additive, such as a plasticizer. Such a liquid additive may be one or two or more liquid additives that are the same as or different from one or two or more liquid additives mentioned above as a component of the fire-resistant layer 2. The liquid additive is preferably a liquid component having an aromatic ring structure and is more preferably one or more liquid additives selected from the group consisting of di-2-ethylhexyl phthalate (DOP), tricresyl phosphate (TCP), and diisodecyl phthalate (DIDP). The amount of liquid additive is not limited. When the amount of liquid additive is large, polymerization of the monomer component(s) of the acrylic adhesive is hindered in synthesis of the adhesive layer 3. Thus, the amount of liquid additive is preferably 20 wt% or less. The lower limit of the amount of liquid additive in the adhesive layer 3 is more preferably 0.1 wt% or more.

When the adhesive layer 3 further contain a liquid additive, the liquid additive contained in the adhesive layer 3 is preferably the same kind of liquid additive contained in the fire-resistant layer 2.

The thickness of the obtained adhesive layer 3 is not particularly limited, and is preferably 5 to 200 µm, particularly preferably 10 to 150 µm, and even more preferably 15 to 100 µm. When the thickness of the obtained adhesive layer 3 is not less than the lower limit, the adhesion properties are stabilized. When the thickness of the obtained adhesive layer 3 is not greater than the upper limit, adhesive residue is less likely to remain.

The adhesive layer 3 is formed on at least one surface of the fire-resistant layer 2.

When applied to a structure containing a low-molecular-weight plasticizer with a high tendency to migrate, the fire-resistant member, which comprises the adhesive layer 3, suffers little decrease in adhesive strength caused by liquid additive migration, thus exhibiting an excellent effect.

The fire-resistant member 1 of the present invention can be used for imparting fire resistance to structures, in particular, structures such as fittings, including windows, *shoji* [paper sliding doors], doors, sliding doors, *fusuma* [Japanese sliding screens], and *ramma* [transoms]; ships; and elevators. The fire-resistant member 1 of the present invention is used for sealing openings or gaps and fire prevention in these structures. For example, the fire-resistant member 1 of the present invention can be used as an airtight material, such as a tight material or a sealing material, for improving airtightness or watertightness of fittings. Such structures may be made of any material, such as metal, synthetic resin, wood, or a combination thereof. The "opening" refers to an opening existing between a structure and another structure or in a structure. Among openings, a "gap" refers to an opening found between two oppositely facing components or portions.

Next, the adhesive layer-equipped fire-resistant member according to the second embodiment is described with reference to Fig. 2. The elements that are the same as those in Fig. 1 are numbered the same, and the detailed explanations thereof are omitted.

In the adhesive layer-equipped fire-resistant member 1 according to the second embodiment of Fig. 2, a liquid additive-resistant underlying layer 4 is disposed between a fire-resistant layer 2 containing a liquid additive and one or more components selected from the group consisting of thermoplastic resins, thermoplastic elastomers, and rubbers, and an adhesive layer 3.

The liquid additive-resistant underlying layer 4 is not particularly limited, and, for example, at least one member selected from the group consisting of polyester resins, polyolefin resins, acrylic resins, epoxy resins, amide resins, urethane resins, and melamine resins is used.

Providing the liquid additive-resistant underlying layer 4 between the fire-resistant layer 2 containing a liquid additive and one or more components selected from the group consisting of thermoplastic resins, thermoplastic elastomers, and rubbers and the adhesive layer 3 can reduce migration of the liquid additive, such as a plasticizer, in the fire-resistant layer 2 to the adhesive layer 3.

The first and second embodiments have been described as examples of the present invention; however, the present invention is not limited to these embodiments, and various modifications as described below are possible.

The shape of the fire-resistant member 1 is not limited to a sheet-like shape as shown in Figs. 1 and 2. Since the composition forming the fire-resistant member 1 has excellent moldability, a molded article that matches the shape of a structure to which the fire-resistant member 1 is attached can be easily obtained. Examples of such molded articles include the thermally expandable multilayer packing for a building material disclosed in JP5347103B, such as glazing channels, tight members, gaskets, and glazing beads.

The present invention is described below in more detail with reference to Examples. However, the present invention is not limited to these Examples.

### Examples

### (1) Production of fire-resistant member samples of Examples 1 to 16 and Comparative Examples 1 and 2

### Example 1

95 parts by weight of butyl acrylate, 5 parts by weight of acrylic acid, and 80 parts by weight of ethyl acetate were added to a reactor equipped with a thermometer, a stirrer, and a condenser. After purging with nitrogen, the reactor was heated to initiate reflux. Subsequently, 0.1 parts by weight of azobisisobutyronitrile was added as a polymerization initiator to the reactor. The mixture was then refluxed for 5 hours to obtain a solution of an acrylic copolymer, which is an acrylic resin-based adhesive. The weight-average molecular weight of the obtained acrylic copolymer was 500000 as measured by GPC using a column "2690 Separations Model" produced by Water. An adhesive layer with a thickness of 0.05 mm was produced from this acrylic copolymer.

After the adhesive layer was applied to a release paper and dried, a polyvinyl chloride-based fire-resistant layer having the composition shown in Table 1 was adhered to the adhesive layer to obtain a fire-resistant member. As samples of the fire-resistant member, a sample left to stand at 23°C for 7 days after the fire-resistant layer was adhered and a sample left to stand at 40°C for 30 days after the fire-resistant layer was adhered were prepared. As polyvinyl chloride (PVC), "TK-1000" produced by Shin-Etsu Chemical Co., Ltd. was used.

**Table 1**

| Composition of fire-resistant layer | | Formulation 1 | |
|---|---|---|---|
| Material | | Parts by weight | Amount (%) |
| Matrix component | Polyvinyl chloride (PVC) | 100 | 24.4 |
| Plasticizer | Diisodecyl phthalate (DIDP) | 100 | 24.4 |
| Inorganic stabilizer | Ca-Zn stabilizer | 4 | 1.0 |
| Lubricant | Calcium stearate | 5 | 1.2 |
| Inorganic filler | Calcium carbonate | 50 | 12.2 |
| Flame retardant | Ammonium polyphosphate | 50 | 12.2 |
| Thermally expandable graphite | Thermally expandable graphite (GREP-EG) | 100 | 24.4 |
| Total | | 409 | 100.0 |

### Example 2

A fire-resistant member was produced in the same manner as in Example 1, except that the proportion of butyl acrylate in the adhesive layer was changed to 99.5 parts by weight and that the proportion of acrylic acid in the adhesive layer was changed to 0.5 parts by weight.

### Example 3

A fire-resistant member was produced in the same manner as in Example 1, except that 98 parts by weight of butyl acrylate and 2 parts by weight of polyvinylpyrrolidone were used instead of 95 parts by weight of butyl acrylate and 5 parts by weight of acrylic acid in the adhesive layer.

### Example 4

A fire-resistant member was produced in the same manner as in Example 1, except the following in the adhesive layer: 0.5 parts by weight of azobisisobutyronitrile was added instead of the addition of 1.0 parts by weight of azobisisobutyronitrile as a polymerization initiator when reflux was initiated; 0.5 parts by weight of azobisisobutyronitrile was further added after reflux for 3 hours; and a plasticizer (DOP) was added to the obtained adhesive such that the amount of the plasticizer was 2 wt% of the adhesive weight. The weight-average molecular weight of the obtained acrylic copolymer was 700000.

### Example 5

A fire-resistant member was produced in the same manner as in Example 1, except that, after Polyment NK-380 (Nippon Shokubai Co., Ltd.) was directly applied as an underlying layer to the fire-resistant layer with a bar coater to a thickness of 0.02 mm, the adhesive was transferred.

### Example 6

A fire-resistant member was produced in the same manner as in Example 4, except the following in the adhesive layer: a plasticizer (DIDP) was added to the obtained adhesive such that the amount of the plasticizer was 2 wt% of the adhesive weight. The weight-average molecular weight of the obtained acrylic copolymer was 700000.

### Example 7

A fire-resistant member was produced in the same manner as in Example 4, except the following in the adhesive layer: a plasticizer (TCP) was added to the obtained adhesive such that the amount of the plasticizer was 2 wt% of the adhesive weight. The weight-average molecular weight of the obtained acrylic copolymer was 700000.

### Example 8

A fire-resistant member was produced in the same manner as in Example 1, except that the composition of the fire-resistant layer was changed as shown in Table 2.

**Table 2**

| Composition of fire-resistant layer | | Formulation 2 | |
|---|---|---|---|
| Material | | Parts by weight | Amount (%) |
| Matrix component | Polyvinyl chloride (PVC) | 100 | 24.4 |
| Plasticizer | DOP | 100 | 24.4 |
| Inorganic stabilizer | Ca-Zn stabilizer | 4 | 1.0 |
| Lubricant | Calcium stearate | 5 | 1.2 |
| Inorganic filler | Calcium carbonate | 50 | 12.2 |
| Flame retardant | Ammonium polyphosphate | 50 | 12.2 |
| Thermally expandable graphite | Thermally expandable graphite (GREP-EG) | 100 | 24.4 |
| Total | | 409 | 100.0 |

### Example 9

A fire-resistant member was produced in the same manner as in Example 1, except that the composition of the fire-resistant layer was changed as shown in Table 3.

**Table 3**

| Composition of fire-resistant layer | | Formulation 3 | |
|---|---|---|---|
| Material | | Parts by weight | Amount (%) |
| Matrix component | Polyvinyl chloride (PVC) | 100 | 24.4 |
| Plasticizer | TCP | 100 | 24.4 |
| Inorganic stabilizer | Ca-Zn stabilizer | 4 | 1.0 |
| Lubricant | Calcium stearate | 5 | 1.2 |
| Inorganic filler | Calcium carbonate | 50 | 12.2 |
| Flame retardant | Ammonium polyphosphate | 50 | 12.2 |
| Thermally expandable graphite | Thermally expandable graphite (GREP-EG) | 100 | 24.4 |
| Total | | 409 | 100.0 |

### Example 10

A fire-resistant member was produced in the same manner as in Example 1, except that the composition of the fire-resistant layer was changed as shown in Table 4.

**Table 4**

| Composition of fire-resistant layer | | Formulation 4 | |
|---|---|---|---|
| Material | | Parts by weight | Amount (%) |
| Matrix component | Polyvinyl chloride (PVC) | 100 | 24.4 |
| Plasticizer | TCP | 25 | 6.1 |
| | DOP | 75 | 18.3 |
| Inorganic stabilizer | Ca-Zn stabilizer | 4 | 1.0 |
| Lubricant | Calcium stearate | 5 | 1.2 |
| Inorganic filler | Calcium carbonate | 50 | 12.2 |
| Flame retardant | Ammonium polyphosphate | 50 | 12.2 |
| Thermally expandable graphite | Thermally expandable graphite (GREP-EG) | 100 | 24.4 |
| Total | | 409 | 100.0 |

### Example 11

A fire-resistant member was produced in the same manner as in Example 1, except that the composition of the fire-resistant layer was changed as shown in Table 5. As ethylene-vinyl acetate copolymer (EVA), "EV460" produced by Du Pont-Mitsui Polychemicals Co. Ltd. was used.

**Table 5**

| | | Formulation 5 | |
|---|---|---|---|
| Material | | Parts by weight | Amount (%) |
| Matrix component | EVA | 100 | 29.5 |
| Plasticizer | Diisodecyl phthalate (DIDP) | 30 | 8.8 |
| Inorganic stabilizer | Ca-Zn stabilizer | 4 | 1.2 |
| Lubricant | Calcium stearate | 5 | 1.5 |
| Inorganic filler | Calcium carbonate | 50 | 14.7 |
| Flame retardant | Ammonium polyphosphate | 50 | 14.7 |
| Thermally expandable graphite | Thermally expandable graphite (GREP-EG) | 100 | 29.5 |
| Total | | 339 | 100.0 |

### Example 12

A fire-resistant member was produced in the same manner as in Example 1, except that the composition of the fire-resistant layer was changed as shown in Table 6. As ethylene-vinyl acetate copolymer (EVA), "EV460" produced by Du Pont-Mitsui Polychemicals Co. Ltd. was used.

**Table 6**

| | | Formulation 6 | |
|---|---|---|---|
| Material | | Parts by weight | Amount (%) |
| Matrix component | EVA | 100 | 29.5 |
| Plasticizer | TCP | 30 | 8.8 |
| Inorganic stabilizer | Ca-Zn stabilizer | 4 | 1.2 |
| Lubricant | Calcium stearate | 5 | 1.5 |
| Inorganic filler | Calcium carbonate | 50 | 14.7 |
| Flame retardant | Ammonium polyphosphate | 50 | 14.7 |
| Thermally expandable graphite | Thermally expandable graphite (GREP-EG) | 100 | 29.5 |
| Total | | 339 | 100.0 |

### Example 13

A fire-resistant member was produced in the same manner as in Example 1, except that the composition of the fire-resistant layer was changed as shown in Table 7. As ethylene propylene rubber (EPDM), "Mitsui EPT 3092M" produced by Mitsui Chemicals, Inc. was used.

**Table 7**

| | | Formulation 7 | |
|---|---|---|---|
| Material | | Parts by weight | Amount (%) |
| Matrix component | EPDM | 100 | 29.5 |
| Plasticizer | TCP | 30 | 8.8 |
| Inorganic stabilizer | Ca-Zn stabilizer | 4 | 1.2 |
| Lubricant | Calcium stearate | 5 | 1.5 |
| Inorganic filler | Calcium carbonate | 50 | 14.7 |
| Flame retardant | Ammonium polyphosphate | 50 | 14.7 |
| Thermally expandable graphite | Thermally expandable graphite (GREP-EG) | 100 | 29.5 |
| Total | | 339 | 100.0 |

### Example 14

A fire-resistant member was produced in the same manner as in Example 1, except that the composition of the fire-resistant layer was changed as shown in Table 8. As an olefinic elastomer (TPO), "Milastomer" produced by Mitsui Chemicals, Inc. was used.

**Table 8**

| | | Formulation 8 | |
|---|---|---|---|
| Material | | Parts by weight | Amount (%) |
| Matrix component | TPO | 100 | 29.5 |
| Plasticizer | TCP | 30 | 8.8 |
| Inorganic stabilizer | Ca-Zn stabilizer | 4 | 1.2 |
| Lubricant | Calcium stearate | 5 | 1.5 |
| Inorganic filler | Calcium carbonate | 50 | 14.7 |
| Flame retardant | Ammonium polyphosphate | 50 | 14.7 |
| Thermally expandable graphite | Thermally expandable graphite (GREP-EG) | 100 | 29.5 |
| Total | | 339 | 100.0 |

### Example 15

A fire-resistant member was produced in the same manner as in Example 1, except that the composition of the fire-resistant layer was changed as shown in Table 9. As chloroprene rubber, "Denka Chloroprene" produced by Denka Company Limited was used.

**Table 9**

| | | Formulation 9 | |
|---|---|---|---|
| Material | | Parts by weight | Amount (%) |
| Matrix component | Chloroprene rubber | 100 | 29.5 |
| Plasticizer | TCP | 30 | 8.8 |
| Inorganic stabilizer | Ca-Zn stabilizer | 4 | 1.2 |
| Lubricant | Calcium stearate | 5 | 1.5 |
| Inorganic filler | Calcium carbonate | 50 | 14.7 |
| Flame retardant | Ammonium polyphosphate | 50 | 14.7 |
| Thermally expandable graphite | Thermally expandable graphite (GREP-EG) | 100 | 29.5 |
| Total | | 339 | 100.0 |

### Example 16

A fire-resistant member was produced in the same manner as in Example 1, except that the composition of the fire-resistant layer was changed as shown in Table 10. As a styrenic thermoplastic elastomer, "Rabalon" produced by Mitsubishi Chemical Corporation was used.

**Table 10**

| | | Formulation 10 | |
|---|---|---|---|
| Material | | Parts by weight | Amount (%) |
| Matrix component | Styrenic thermoplastic elastomer | 100 | 29.5 |
| Plasticizer | TCP | 30 | 8.8 |
| Inorganic stabilizer | Ca-Zn stabilizer | 4 | 1.2 |
| Lubricant | Calcium stearate | 5 | 1.5 |
| Inorganic filler | Calcium carbonate | 50 | 14.7 |
| Flame retardant | Ammonium polyphosphate | 50 | 14.7 |
| Thermally expandable graphite | Thermally expandable graphite (GREP-EG) | 100 | 29.5 |
| Total | | 339 | 100.0 |

### Comparative Example 1

A fire-resistant member was produced in the same manner as in Example 1, except the following in the adhesive layer: 0.5 parts by weight of azobisisobutyronitrile was added as a polymerization initiator. The weight-average molecular weight of the obtained acrylic copolymer was 400000.

### Comparative Example 2

A fire-resistant member was produced in the same manner as in Comparative Example 1, except the following in the adhesive layer: a plasticizer (DOP) was added to the obtained adhesive such that the amount of the plasticizer was 10 wt% of the adhesive weight. The weight-average molecular weight of the obtained acrylic copolymer was 400000.

### (2) Evaluation of performance of each sample by testing Expansion rate and shape retention

The fire-resistant members of Examples 1 to 16 and Comparative Examples 1 and 2 were heated at 600°C for 20 minutes, and the expansion rate and the shape retention after heating were evaluated. In Table 11, the expansion rate represents the ratio of the volume after heating to the volume before heating. The shape retention was evaluated as follows.
A: After heating at 600°C for 30 minutes, the shape does not collapse when the fire-resistant member is held with a hand.
B: After heating at 600°C for 30 minutes, the fire-resistant member can be held with a hand, but the shape collapses a little. C: After heating at 600°C for 30 minutes, the shape collapses when the fire-resistant member is lifted by hand.

### Holding power

The holding power was measured according to JIS Z 0237.

Each of the fire-resistant members of Examples 1 to 16 and Comparative Examples 1 and 2 (length: 12.5 mm) was adhered to a stainless steel test plate, and a load was applied. After 1 hour under 40°C conditions, the distance of shift from the initial position (mm) or whether the fire-resistant member fell was determined.

As shown in Table 11, the fire-resistant member of Comparative Example 1 showed poor shape retention. The sample of the fire-resistant member of Comparative Example 1 at 40°C 30 days after application and the two samples of the fire-resistant member of Comparative Example 2 had low holding power, i.e., fell after 1 hour under 40°C conditions.

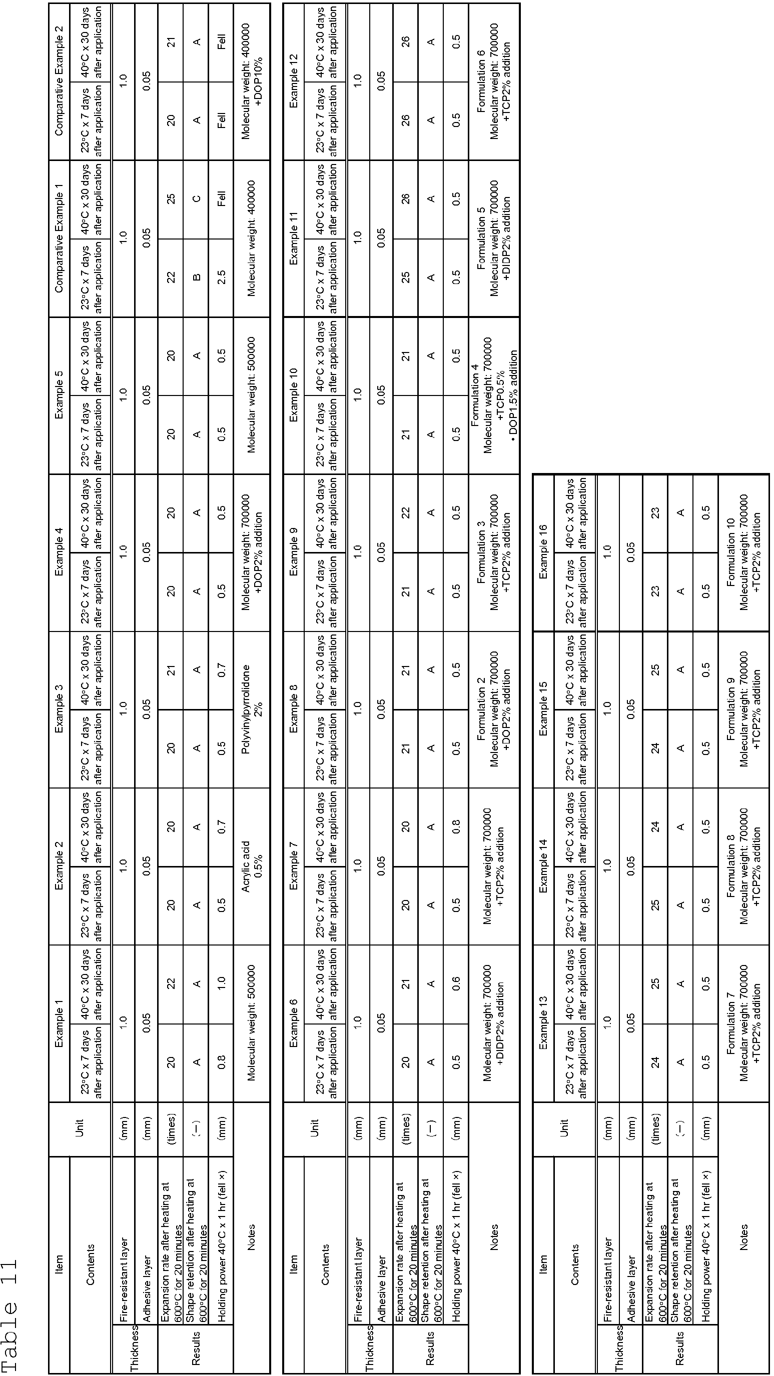

Embodiments and examples of the present invention are specifically described above; however, the present invention is not limited to these embodiments, and various modifications may be made based on the technical concept of the present invention.

For example, the configurations, methods, processes, shapes, materials, numerical values, described in the embodiments and examples described above are merely examples, and configurations, methods, processes, shapes, materials, numerical values, different from the above may also be used as necessary.

In addition, the configurations, methods, processes, shapes, materials, numerical values, and the like described in the embodiments can be combined with each other without departing from the gist of the present invention.

The present invention includes the following.
1. An adhesive layer-equipped fire-resistant member comprising:
   a fire-resistant layer containing a liquid additive, a thermally expandable graphite, and one or more components selected from the group consisting of thermoplastic resins, thermoplastic elastomers, and rubbers; and
   a liquid additive-resistant adhesive layer disposed on one side of the fire-resistant layer.
2. An adhesive layer-equipped fire-resistant member comprising:
   a fire-resistant layer containing a liquid additive, a thermally expandable graphite, and one or more components selected from the group consisting of thermoplastic resins, thermoplastic elastomers, and rubbers;
   an adhesive layer; and
   a liquid additive-resistant underlying layer disposed between the fire-resistant layer and the adhesive layer.
3. The fire-resistant member according to Item 2, wherein the liquid additive-resistant underlying layer contains at least one member selected from the group consisting of polyester resins, polyolefin resins, acrylic resins, epoxy resins, amide resins, urethane resins, and melamine resins.
4. The fire-resistant member according to any one of Items 1 to 3, wherein the adhesive layer is an acrylic adhesive that satisfies the following (I-1):
   (I-1) a resin that the adhesive layer comprises has a weight-average molecular weight of 500000 or more.
5. The fire-resistant member according to Item 4, wherein the adhesive layer is an acrylic adhesive that further satisfies the following (II) or (III):
   (II) the resin that the adhesive layer comprises contains 0.5 to 40 wt% acrylic acid,
   (III) the resin that the adhesive layer comprises contains 1 to 10 wt% vinylpyrrolidone as a monomer component.
6. The fire-resistant member according to any one of Items 1 to 5, wherein the adhesive layer is an acrylic adhesive that satisfies the following (I-2):
   (I-2) the adhesive layer contains the same kind of liquid additive as the liquid additive contained in the fire-resistant layer.
7. The fire-resistant member according to any one of Items 1 to 6, wherein the liquid additive in the fire-resistant layer comprises one or more liquid additives selected from the group consisting of di-2-ethylhexyl phthalate, tricresyl phosphate, and diisodecyl phthalate.
8. The fire-resistant member according to any one of Items 1 to 7, wherein the amount of liquid additive in the fire-resistant layer is 120 parts by weight or less relative to 100 parts by weight of the one or more components selected from the group consisting of thermoplastic resins, thermoplastic elastomers, and rubbers.
9. The fire-resistant member according to any one of Items 1 to 9, wherein the fire-resistant layer further contains a polyphosphoric acid salt.
10. The fire-resistant member according to any one of Items 1 to 10, which is in the form of a sheet or a molded article.
11. A sealing material for fittings comprising the fire-resistant member according to any one of Items 1 to 11.

## Claims

1. An adhesive layer-equipped fire-resistant member comprising:
a fire-resistant layer containing a liquid additive, thermally expandable graphite, and one or more components selected from the group consisting of thermoplastic resins, thermoplastic elastomers, and rubbers; and
a liquid additive-resistant adhesive layer disposed on one side of the fire-resistant layer.

2. An adhesive layer-equipped fire-resistant member comprising:
a fire-resistant layer containing a liquid additive, thermally expandable graphite, and one or more components selected from the group consisting of thermoplastic resins, thermoplastic elastomers, and rubbers;
an adhesive layer; and
a liquid additive-resistant underlying layer disposed between the fire-resistant layer and the adhesive layer.

3. The fire-resistant member according to claim 2, wherein the liquid additive-resistant underlying layer contains at least one member selected from the group consisting of polyester resins, polyolefin resins, acrylic resins, epoxy resins, amide resins, urethane resins, and melamine resins.

4. The fire-resistant member according to any one of claims 1 to 3, wherein the adhesive layer is an acrylic adhesive that satisfies the following (I-1):
(I-1) a resin that the adhesive layer comprises has a weight-average molecular weight of 500000 or more.

5. The fire-resistant member according to claim 4, wherein the adhesive layer is an acrylic adhesive that further satisfies the following (II) or (III):
(II) the resin that the adhesive layer comprises contains 0.5 to 40 wt% acrylic acid,
(III) the resin that the adhesive layer comprises contains 1 to 10 wt% vinylpyrrolidone as a monomer component.

6. The fire-resistant member according to any one of claims 1 to 5, wherein the adhesive layer is an acrylic adhesive that satisfies the following (I-2):
(I-2) the adhesive layer contains the same kind of liquid additive as the liquid additive contained in the fire-resistant layer.

7. The fire-resistant member according to any one of claims 1 to 6, wherein the liquid additive in the fire-resistant layer comprises one or more liquid additives selected from the group consisting of di-2-ethylhexyl phthalate, tricresyl phosphate, and diisodecyl phthalate.

8. The fire-resistant member according to any one of claims 1 to 7, wherein the amount of liquid additive in the fire-resistant layer is 120 parts by weight or less relative to 100 parts by weight of the one or more components selected from the group consisting of thermoplastic resins, thermoplastic elastomers, and rubbers.

9. The fire-resistant member according to any one of claims 1 to 8, wherein the fire-resistant layer further contains a polyphosphoric acid salt.

10. The fire-resistant member according to any one of claims 1 to 9, which is in the form of a sheet or a molded article.

11. A sealing material for fittings comprising the fire-resistant member according to any one of claims 1 to 10.

## Patentansprüche

1. Mit Klebstoffschicht ausgestattetes feuerfestes Element, umfassend:
eine feuerfeste Schicht, enthaltend ein flüssiges Additiv, thermisch expandierbaren Graphit und eine oder mehrere Komponenten, gewählt aus der Gruppe, bestehend aus thermoplastischen Harzen, thermoplastischen Elastomeren und Kautschuken; und
eine gegenüber flüssigem Additiv beständige Klebstoffschicht, die auf einer Seite der feuerfesten Schicht angeordnet ist.

2. Mit Klebstoffschicht ausgestattetes feuerfestes Element, umfassend:
eine feuerfeste Schicht, enthaltend ein flüssiges Additiv, thermisch expandierbaren Graphit und eine oder mehrere Komponenten, gewählt aus der Gruppe, bestehend aus thermoplastischen Harzen, thermoplastischen Elastomeren und Kautschuken;
eine Klebstoffschicht; und
eine gegenüber flüssigem Additiv beständige Unterlagenschicht, die zwischen der feuerfesten Schicht und der Klebstoffschicht angeordnet ist.

3. Feuerfestes Element nach Anspruch 2, wobei die gegenüber flüssigem Additiv beständige Unterlagenschicht mindestens ein Element enthält, gewählt aus der Gruppe, bestehend aus Polyesterharzen, Polyolefinharzen, Acrylharzen, Epoxyharzen, Amidharzen, Urethanharzen und Melaminharzen.

4. Feuerfestes Element nach irgendeinem der Ansprüche 1 bis 3, wobei die Klebstoffschicht ein Acrylklebstoff ist, welcher dem folgenden (I-1) genügt:
(I-1) ein Harz, welches die Klebstoffschicht umfasst, besitzt ein gewichtsmittleres Molekulargewicht von 500000 oder mehr.

5. Feuerfestes Element nach Anspruch 4, wobei die Klebstoffschicht ein Acrylklebstoff ist, welcher weiterhin die folgenden (II) oder (III) erfüllt:
(II) das Harz, welches die Klebstoffschicht umfasst, enthält 0,5 bis 40 Gew.-% Acryl säure,
(III) das Harz, welches die Klebstoffschicht umfasst, enthält 1 bis 10 Gew.-% Vinylpyrrolidon als eine Monomerkomponente.

6. Feuerfestes Element nach irgendeinem der Ansprüche 1 bis 5, wobei die Klebstoffschicht ein Acrylklebstoff ist, welcher das folgende (I-2) erfüllt:
(I-2) die Klebstoffschicht enthält die gleiche Art an flüssigem Additiv wie das flüssige Additiv, das in der feuerfesten Schicht enthalten ist.

7. Feuerfestes Element nach irgendeinem der Ansprüche 1 bis 6, wobei das flüssige Additiv in der feuerfesten Schicht ein oder mehrere flüssige Additive umfasst, gewählt aus der Gruppe, bestehend aus Di-2-ethylhexylphthalat, Tricresylphosphat und Diisodecyl phthalat.

8. Feuerfestes Element nach irgendeinem der Ansprüche 1 bis 7, wobei die Menge an flüssigem Additiv in der feuerfesten Schicht 120 Gewichtsteile oder weniger beträgt, bezogen auf 100 Gewichtsteile der einen oder mehreren Komponenten, gewählt aus der Gruppe, bestehend aus thermoplastischen Harzen, thermoplastischen Elastomeren und Kautschuken.

9. Feuerfestes Element nach irgendeinem der Ansprüche 1 bis 8, wobei die feuerfeste Schicht weiterhin ein Polyphosphorsäuresalz enthält.

10. Feuerfestes Element nach irgendeinem der Ansprüche 1 bis 9, das in der Form einer Folie oder eines Formkörpers vorliegt.

11. Dichtungsmaterial für Armaturen, umfassend das feuerfeste Element nach irgendeinem der Ansprüche 1 bis 10.

## Revendications

1. Élément résistant au feu muni d'une couche adhésive comprenant :
une couche résistante au feu contenant un additif liquide, du graphite expansible thermiquement et un ou plusieurs composants choisis dans le groupe constitué de résines thermoplastiques, d'élastomères thermoplastiques et de caoutchoucs ; et
une couche adhésive résistante aux additifs liquides disposée sur un côté de la couche résistante au feu.

2. Élément résistant au feu muni d'une couche adhésive comprenant :
une couche résistante au feu contenant un additif liquide, du graphite expansible thermiquement et un ou plusieurs composants choisis dans le groupe constitué de résines thermoplastiques, d'élastomères thermoplastiques et de caoutchoucs ;
une couche adhésive ; et
une couche sous jacente résistante aux additifs liquides disposée entre la couche résistante au feu et la couche adhésive.

3. Élément résistant au feu selon la revendication 2, dans lequel la couche sous-jacente résistante aux additifs liquides contient au moins un élément choisi dans le groupe constitué de résines de polyester, de résines de polyoléfine, de résines acryliques, de résines époxy, de résines amide, de résines uréthane et de résines mélamine.

4. Élément résistant au feu selon l'une quelconque des revendications 1 à 3, dans lequel la couche adhésive est un adhésif acrylique qui satisfait la condition suivante (I-1) : (I-1) une résine comprise par la couche adhésive a un poids moléculaire moyen en poids de 500 000 ou plus.

5. Élément résistant au feu selon la revendication 4, dans lequel la couche adhésive est un adhésif acrylique qui satisfait en outre la condition (II) ou (III) :
(II) la résine comprise par la couche adhésive contient 0,5 à 40 % en poids d'acide acrylique,
(III) la résine comprise par la couche adhésive contient 1 à 10 % en poids de vinylpyrrolidone en tant que composant monomère.

6. Élément résistant au feu selon l'une quelconque des revendications 1 à 5, dans lequel la couche adhésive est un adhésif acrylique qui satisfait la condition suivante (I-2) :
(I-2) la couche adhésive contient le même type d'additif liquide que l'additif liquide contenu dans la couche résistante au feu.

7. Élément résistant au feu selon l'une quelconque des revendications 1 à 6, dans lequel l'additif liquide dans la couche résistante au feu comprend un ou plusieurs additifs liquides choisis dans le groupe constitué par le phtalate de di-2-éthylhexyle, le phosphate de tricrésyle et le phtalate de diisodécyle.

8. Élément résistant au feu selon l'une quelconque des revendications 1 à 7, dans lequel la quantité d'additif liquide dans la couche résistante au feu est de 120 parties en poids ou moins par rapport à 100 parties en poids du ou des composants choisis dans le groupe constitué de résines thermoplastiques, d'élastomères thermoplastiques et de caoutchoucs.

9. Élément résistant au feu selon l'une quelconque des revendications 1 à 8, dans lequel la couche résistante au feu contient en outre un sel d'acide polyphosphorique.

10. Élément résistant au feu selon l'une quelconque des revendications 1 à 9, qui se présente sous la forme d'une feuille ou d'un article moulé.

11. Matériau d'étanchéité pour charnières comprenant l'élément résistant au feu selon l'une quelconque des revendications 1 à 10.
